# EUROPÄISCHE PATENTSCHRIFT

(11) **EP 0 752 747 B1**
(45) Veröffentlichungstag und Bekanntmachung des Hinweises auf die Patenterteilung: **16.09.1998**
(21) Anmeldenummer: 96110237.3
(22) Anmeldetag: 25.06.1996
(51) Int. Cl.: H02G 15/007, H02G 15/013

(54) **Kabelabfangvorrichtung bei einer Kabeleinführung**
Cable retention device in cable entry
Dispositif de rétention de câble à l'introduction de câble

(30) Priorität: 03.07.1995 DE 19524183
(43) Veröffentlichungstag der Anmeldung: 08.01.1997
(73) Patentinhaber: RXS Kabelgarnituren Gesellschaft mit beschränkter Haftung, 58093 Hagen (DE)
(72) Erfinder: Müller, Thorsten, Dipl.-Ing., 58708 Menden (DE); Meltsch, Hans-Jürgen, Dipl.-Ing., 58239 Schwerte (DE)
(74) Vertreter: Epping, Wilhelm, Dr.-Ing.

(56) Entgegenhaltungen:
- EP-A- 0 002 789
- EP-A- 0 219 072
- DE-A- 2 826 584
- DE-B- 2 063 097
- US-A- 4 581 480

## Beschreibung

Die Erfindung betrifft eine Kabelabfangvorrichtung zur zug-, schub- und torsionsfesten Fixierung von Kabeln im Eingangsbereich von Kabelmuffen, bestehend aus einem U-förmig gebogenen Band mit aus dem beide Schenkel verbindenden Teil in entgegengesetzter Richtung der Schenkel ragenden, scharfkantigen Prägungen.

Aus der deutschen Offenlegungsschrift 35 36 597 ist eine Abfangvorrichtung für Muffen bekannt, die dort in einem Dichtungskörper aus einzelnen Lamellen eingesetzt wird. Es werden dort Scheiben verwendet, die durch Spalte des Dichtungskörpers mit Hilfe einer Druckvorrichtung in den Kabelmantel der eingeführten Kabel eingepreßt werden.

Aus der deutschen Offenlegungsschrift 35 36 598 ist eine Kabelabfangvorrichtung bekannt, die hinter dem stirnseitigen Dichtungskörper einer Kabelmuffe angeordnet wird, so daß sie einen Teil des Muffenraumes in Anspruch nimmt. Die Kabel werden hier mit Hilfe von Spannmitteln an Aufnahmen angeklemmt, die am Dichtungskörper befestigt sind.

Aus DE-A-26 32 852 ist ein Adapter für Kabelanlagen bekannt, der aus zwei längsgeteilten Kunststoffhalbschalen mit einem angespritzten Dichtungskörper aus hintereinanderliegenden Lamellen besteht. In einem Lamellenzwischenraum wird ein Abfangring eingesetzt, der ein- oder beidseitig abgewinkelt ist und mit einer Abwinklung in einen Lamellenzwischenraum hineinragt.

Aufgabe der vorliegenden Erfindung ist nun, eine Kabelabfangvorrichtung zu schaffen, die aus möglichst wenig Einzelteilen besteht, somit leicht montierbar ist und im Muffenraum keinen zusätzlichen Montageraum benötigt.

Die gestellte Aufgabe wird nun mit Hilfe einer Kabelabfangvorrichtung, welche die Merkmale des Anspruchs 1 aufweist, gelöst.

Vorteile an der Erfindung gegenüber dem Stand der Technik sind besonders darin zu sehen, daß diese Kabelabfangvorrichtung aus möglichst wenigen Einzelteiten besteht und somit leicht zu montieren ist und vor allen Dingen innerhalb des Muffenraumes keinen Platz benötigt, da sie direkt in der Kabeleinführungsöffnung eingesetzt wird. Damit steht der gesamte Muffenraum der Spleißung zur Verfügung. Es handelt sich dabei um ein U-förmig gebogenes Band, das in den Umfang einer Kabeleinführungsöffnung eingelegt wird. Die beiden Schenkel des U-förmigen Bandes umfassen zumindest zum Teil über den Umfang hinweg die Wandung des Einführungsbereiches der Kabelmuffe, so daß hierdurch eine axiale Fixierung erfolgt. Das U-förmige Band besitzt weiterhin nach einwärts ragende, scharfkantige Prägungen, mit denen der Kabelmantel eines einzuführenden Kabels fixiert wird, so daß eine Abfangung der mechanischen Belastungen durch auftretende Zug-, Schub- oder Torrsionskräfte erfolgt.

Die Abfangvorrichtung gemäß der Erfindung kann besonders vorteilhaft bei Kabelmuffen mit lamellenartig aufgebauten Einführungsbereichen oder bei Kabelmuffen mit lamellenartigen Dichtungskörpern eingesetzt werden, da bei diesen Ausführungsformen die Abfangvorrichtung nur auf einer Lamelle aufgesetzt wird. Die übrigen Lamellen stehen dann, wie bisher voll zur Dichtung des Einführungsbereiches zur Verfügung. Doch kann auch das Dichtungsmaterial über die Abfangvorrichtung hinweg eingelegt werden. Die Kabelabfangvorrichtung wird zweckmäßigerweise auf die innerste Lamelle aufgesetzt. Die Abfangvorrichtung in Form des U-förmigen Bandes kann sich über den gesamten Umfang hinweg oder auch nur über Teilbereiche erstrecken; sie kann dabei zusammenhängend in einem Stück oder auch in Teilstücken eingesetzt werden. Im übrigen ist das U-förmige Band mit Quereinschnitten versehen, so daß es relativ flexibel ist und dem jeweiligen Durchmesser der Kabeleinführungsöffnungen angepaßt werden kann. Die scharfkantigen Prägungen können als Durchrisse, als Spitzen oder Ausformungen mit scharfen Kanten ausgebildet sein. Die Dichtung im Kabeleinführungsbereich erfolgt zweckmäßigerweise mit einem plastischen Dichtungsband, das auch, wie oben bereits erwähnt, über bzw. unter der Kabeleinführungsvorrichtung eingelegt wird, so daß die Abdichtung auch in diesem Abfangbereich gesichert ist. Die Kabeleinführungsvorrichtung kann bei jeder Kabelmuffe oder jedem Dichtungskörper einer Kabelmuffe verwendet werden, die entsprechend mechanisch feste Wandungen aufweisen, um die auftretenden Kräfte aufnehmen zu können. Es ist dabei jeweils nur die Weite der U-Form des Bandes auf die Stärke der Wandung abzustimmen. Weitere Bauteile sind nicht vorhanden, so daß weitere Anpassungen nicht erfolgen müssen. Die Anpassung des jeweils erforderlichen Durchmessers der Kabeleinführungsöffnung ist entweder vorgegeben oder erfolgt durch entsprechendes Aufschneiden oder Ausbrechen.

Die Erfindung wird nun anhand von vier Figuren näher erläutert.
- Figur 1: zeigt eine Kabeleinführung mit einer Kabelabfangvorrichtung gemäß der Erfindung im Schnittbild.
- Figur 2: zeigt die Ansicht der Kabeleinführung vom Inneren der Muffe her.
- Figur 3: zeigt die Kabelabfangvorrichtung in Draufsicht.
- Figur 4: zeigt die Kabelabfangvorrichtung im Profil.

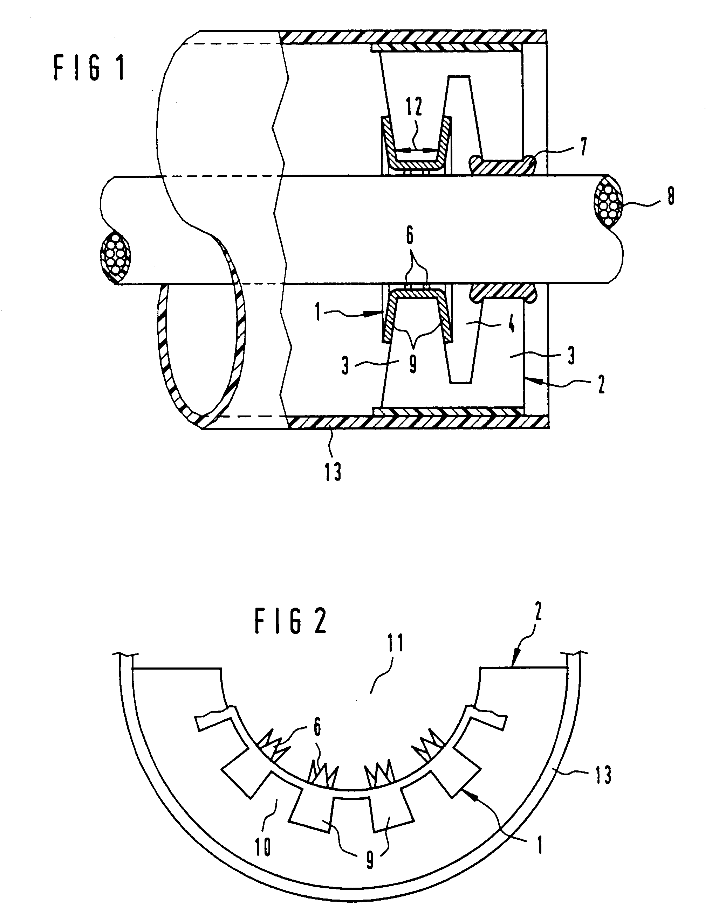

In Figur 1 ist eine Kabelmuffe dargestellt, die aus einem längsgeteilten Muffenrohr 13 und mindestens einem stirnseitigen Dichtungskörper 2 für die Kabeleinführung besteht. Die Wandung des Dichtungskörpers 2 ist in diesem Fall aus hintereinanderliegenden Lamellen 3 gebildet, durch die eine Kabeleinführungsöffnung eingebracht wurde, und aus zwischen den Lamellen 3 liegenden Zwischenräumen 4. Die Kabeleinführungsvorrichtung 1 gemäß der Erfindung, die aus einem U-förmig gebogenen Band besteht, umfaßt z.B. die innerste Lamelle 3 mit ihren beiden Schenkeln 9 von beiden Seiten her, so daß eine Bewegung in axialer Richtung nicht mehr möglich ist. Nach einwärts in die Kabeleinführungsöffnung ragende, scharfkantige Prägungen 6 werden beim Schließen der Kabelmuffe in den Kabelmantel des eingeführten Kabels 8 gepreßt. Auf diese Weise erfolgt somit die mechanische Abfangung des Kabels 8. Um dies sicherzustellen, muß die Weite der U-Form der Breite 12 der Eintrittswandung, in diesem Fall einer Lamelle 3, entsprechen und der Form angepaßt sein. Außerdem ist ersichtlich, daß wie üblich ein Dichtungsband 7 in die Kabeleinführungsöffnung eingefügt ist. Dieses Dichtungsband 7 kann sich jedoch auch über die Kabelabfangvorrichtung 1 hinweg erstrekken, so daß auch dort die dichtende Funktion zur Geltung kommt. Dichtungsmaterialien können auch im Inneren der U-Form eingesetzt werden.

Die Figur 2 verdeutlicht den Einsatz der Kabelabfangvorrichtung gemäß der Erfindung in einer Ansicht vom Inneren der Muffe her. Daraus ist ersichtlich, daß das U-förmig gebogene Band der Kabelabfangvorrichtung 1 durch mehrere Quereinschnitte 10 in mehrere einzelne, jedoch zusammenhängende U-förmige Elemente 5 unterteilt ist. Auf diese Weise wird die Flexibilität des Bandes erhöht und das anpassende Einlegen in kreisförmige Einführungsöffnungen 11 erleichtert. Dieses Band kann ringsum oder in mehreren Einzelteilen eingefügt werden, wobei bei einer quergeteilten Muffe bzw. einem quergeteilten Dichtungskörper 2 zweckmäßig ist, eine Teilung der Kabelabfangvorrichtung 1 vorzunehmen. Weiterhin sind die nach einwärts gerichteten scharfkantigen Prägungen 6 in Form von Spitzen erkennbar, die in den hier nicht dargestellten Kabelmantel des einzuführenden Kabels eingreifen.

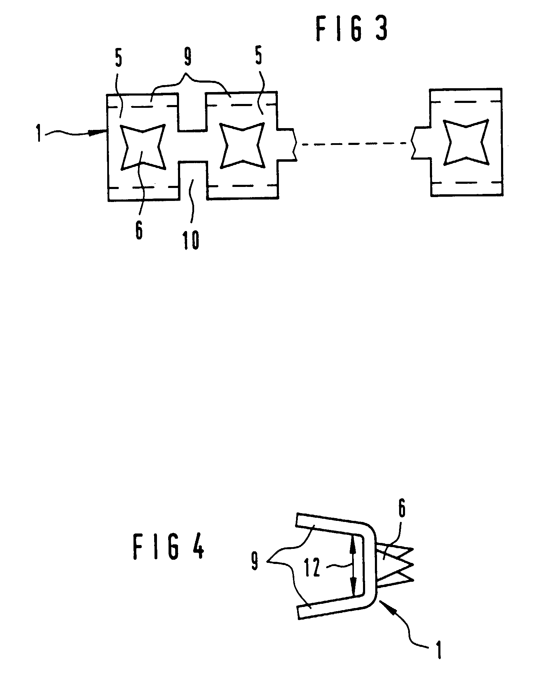

Figur 3 zeigt das U-förmig gebogene Band der Kabelabfangvorrichtung 1 in einer Draufsicht, so daß deutlich wird, daß die einzelnen Elemente 5 nur über dünne Brücken zusammenhängen und deshalb eine große Anpassungsflexibilität gegeben ist. Weiterhin ist die sternförmige Prägung 6 erkennbar, wobei die Gestaltung dieser Prägungen vielfältig sein kann. Die erforderliche Länge des Bandes wird durch entsprechendes Abschneiden gewählt.

Die Figur 4 zeigt das U-förmige Band der Kabeleinführung 1 in einer Profilansicht, so daß die U-Form mit den beiden Schenkeln 9 hervorgeht, wobei die abzustimmende Weite 12 angedeutet ist.

## Patentansprüche

1. Kabelabfangvorrichtung zur zug-, schub- und torsionsfesten Fixierung von Kabeln im Eingangsbereich von Kabelmuffen, bestehend aus einem U-förmig gebogenen Band (1) mit aus dem beide Schenkel (9) verbindenden Teil in entgegengesetzter Richtung der Schenkel (9) ragenden, scharfkantigen Prägungen (6) und einer in Kabelmuffeneingangsbereich auf das Kabel aufsetzbaren wandung (3) **dadurch gekennzeichnet,** daß das U-förmige Band (1) in der Kabeleinführungsöffnung (11) des Einführungsbereiches zumindest teilweise entlang des Umfanges kreisförmig einlegbar ist, wobei die beiden Schenkel (9) die Wandung (3), auf deren Stärke und Form die Weite der U-Form des Bandes abgestimmt ist, beiderseits umfassen.

2. Kabelabfangvorrichtung nach Anspruch 1,
**dadurch gekennzeichnet,**
daß das U-förmige Band (1) auf einer, vorzugsweise auf der innenliegenden Lamelle, von mehreren hintereinanderliegenden, die Wandung des Eingangsbereiches der Kabelmuffe bildenden Lamellen (3) aufsetzbar ist.

3. Kabelabfangvorrichtung nach einem der vorhergehenden Ansprüche,
**dadurch gekennzeichnet,**
daß das U-förmige Band (1) Quereinschnitte (10) aufweist, so daß es in einzelne zusammenhängende U-förmige Elemente (5) unterteilt ist.

4. Kabelmuffe nach einem der vorhergehenden Ansprüche,
**dadurch gekennzeichnet,**
daß die scharfkantigen Prägungen (6) als Durchrisse ausgebildet sind.

5. Kabelmuffe nach einem der Ansprüche 1 bis 3,
**dadurch gekennzeichnet,**
daß die scharfkantigen Prägungen als Spitzen ausgebildet sind.

6. Kabelabfangvorrichtung nach einem der vorhergehenden Ansprüche,
**dadurch gekennzeichnet,**
daß das U-förmige Band (1) in der Kabeleinführungsöffnung (11) einer Kabelmuffe aus Halbschalen mit angeformten stirnseitigen Eingangsbereichen einsetzbar ist.

7. Kabelabfangvorrichtung nach einem der Ansprüche 1 bis 5,
**dadurch gekennzeichnet,**
daß das U-förmige Band (1) in der Kabeleinführungsöffnung (11) einer Kabelmuffe einsetzbar ist, die aus einem Muffenrohr (13) und einem Dichtungskörper (2) aus mehreren hintereinanderliegenden Lamellen (3) besteht.

8. Kabelabfangvorrichtung nach Anspruch 7,
**dadurch gekennzeichnet,**
daß das U-förmige Band (1) in der Einführungsöffnung (11) eines Dichtungskörpers (2) angeordnet ist, der in der Einführungsebene geteilt ist.

## Claims

1. Cable retention apparatus for fixing cables in a manner that is resistant to tension, pushing and torsion in the entry region of cable couplers, comprising a strip (1) which is bent in a U-shape and has sharp-edged embossed features (6) which project from the part which connects the two limbs (9), in the opposite direction to the limbs (9), and has a wall (3) which can be placed onto the cable in the cable coupler entry region, characterized in that the U-shaped strip (1) can be inserted in a circular shape in the cable entry opening (11) of the entry region at least partially along the circumference, the two limbs (9) surrounding the wall (3) on both sides, to the shape and form of which the width of the U-shape of the strip is matched.

2. Cable retention apparatus according to Claim 1, characterized in that the U-shaped strip (1) can be placed on a laminate (3), preferably on the internal laminate, of a plurality of laminates (3) which are located one behind the other and form the wall of the entry region of the cable coupler.

3. Cable retention apparatus according to one of the preceding claims, characterized in that the U-shaped strip (1) has transverse incisions (10) such that it is divided into individual, cohesive, U-shaped elements (5).

4. Cable coupler according to one of the preceding claims, characterized in that the sharp-edged embossed features (6) are designed as through-breaks.

5. Cable coupler according to one of Claims 1 to 3, characterized in that the sharp-edged embossed features are designed as spikes.

6. Cable retention apparatus according to one of the preceding claims, characterized in that the U-shaped strip (1) can be inserted in the cable entry opening (11) of the cable coupler composed of half shells with integrally formed entry regions at the ends.

7. Cable retention apparatus according to one of Claims 1 to 5, characterized in that the U-shaped strip (1) can be inserted in the cable entry opening (11) of a cable coupler which comprises a coupler tube (13) and a sealing body (2) composed of a plurality of laminates (3) located one behind the other.

8. Cable retention apparatus according to Claim 7, characterized in that the U-shaped strip (1) is arranged in the entry opening (11) of a sealing body (2) which is split in the entry plain.

## Revendications

1. Dispositif de rétention de câble pour fixer des câbles, d'une façon résistante à la traction, à la poussée et à la torsion, dans la zone d'introduction de boîtes de jonction, ce dispositif étant constitué d'une bande (1) pliée en forme de U avec des empreintes (6) à angles vifs faisant saillie de la partie qui relie les deux joues (9) du U dans la direction opposée à ces joues (9) et d'une paroi (3) pouvant être placée sur le câble dans la zone d'introduction de la boîte de câble
**caractérisé par le fait**
que la bande (1) en forme de U peut être insérée circulairement, au moins en partie, le long du périmètre, dans l'ouverture de l'introduction de câble (11) de la zone d'introduction, les deux joues (9) englobant des deux côtés la paroi (3), sur l'épaisseur et la forme de laquelle est adaptée la largeur de la forme en U de la bande.

2. Dispositif de rétention de câble selon la revendication 1,
**caractérisé par le fait**
que la bande (1) en forme de U peut être posée sur une lamelle, de préférence la lamelle intérieure, parmi une pluralité de lamelles (3), placées l'une derrière l'autre, formant la paroi de la zone d'entrée de la boîte de jonction de câble.

3. Dispositif de rétention de câble selon une des revendications précédentes,
**caractérisé par le fait**
que la bande (1) en forme de U comporte des entailles transversales (10) de telle sorte qu'il est divisé en éléments individuels (5) en forme de U reliés les uns aux autres.

4. Boîte de jonction pour câbles selon une des revendications précédentes
**caractérisé par le fait**
que les empreintes (6) à arêtes vives sont formés par des fissures passantes.

5. Boîte de jonction pour câbles selon une des revendications 1 à 3
**caractérisé par le fait**
que les empreintes à arêtes vives sont formées par des pointes.

6. Dispositif de rétention de câble selon une des revendications précédentes
**caractérisé par le fait**
que la bande (1) en forme de U peut être posée dans l'ouverture d'introduction de câble (11) d'une boîte de jonction de câble constitué de demi-coques avec des zones d'entrée coulées, côté extérieur.

7. Dispositif de rétention de câble selon une des revendications 1 à 5
**caractérisé par le fait**
que la bande (1) en forme de U peut être placée dans l'ouverture de l'introduction de câble (11) d'une boîte de jonction de câble, constituée d'un tube (13) et d'un corps d'étanchéité (2) comportant plusieurs lamelles (3) placées l'une derrière l'autre.

8. Dispositif de rétention de câble selon la revendication 7
**caractérisé par le fait**
que la bande (1) en forme de U est placée dans l'ouverture de l'introduction (11) d'un corps d'étanchéité (2) divisé en deux dans le plan d'introduction.
